# EUROPEAN PATENT APPLICATION

(11) **EP 3 875 295 A1**
(43) Date of publication of application: **08.09.2021**
(21) Application number: 20382164.0
(22) Date of filing: 06.03.2020
(51) Int. Cl.: B60J 3/02

(54) **VEHICLE ROOF ASSEMBLY WITH RETRACTABLE SUNVISOR**

(71) Applicant: Grupo Antolin-Ingenieria, S.A., 09007 Burgos (ES)
(72) Inventor: PÉREZ FONTANEDA, Sara, 09007 Burgos (ES); ALONSO AUSÍN, Gisleno, 09007 Burgos (ES); DE BUSTOS SAINZ, Lorena, 09007 Burgos (ES)
(74) Representative: Capitán García, Maria Nuria

(57) **Abstract**

Vehicle roof assembly with retractable sunvisor comprising a vehicle roof structure, a headliner, and a retractable sunvisor which comprises a sunvisor screen assembly, a sliding mechanism comprising an assistance device, and a structural frame. Due to the bulkiest part of the assistance device is just behind the front cross-beam, and above the lowest point of the front cross-beam in the z direction the available room in the vehicle interior is not penalized, and at the same time it is conveniently attached to the roof structure in order to keep the structural stability of the whole assembly, avoiding noises and rattles, and ensuring a proper working of the whole assembly.

## Description

### FIELD OF THE INVENTION

The present invention relates to a vehicle roof assembly with retractable sunvisor comprising a vehicle roof structure, a headliner, and a retractable sunvisor.

### BACKGROUND OF THE INVENTION

Sunvisors are widely used in vehicles as an essential part to shade the vehicle users occupying the front seats from the glare coming from the sun or from the other vehicle lights.

Normally, sunvisors are pivotally attached to the vehicle roof through the headliner in order to allow them adopting two positions, a stowed position in which the sunvisor rests against the headliner main surface, and a frontal use position in which the sunvisor faces the vehicle windshield and shades the glare coming through said windshield.

Optionally, the sunvisor can be configured to adopt a lateral use position in which it shades the glare coming from the side windows. In order to do this, the sunvisor comprises two attachment points to the roof structure, one fixed and another one removable to allow folding the sunvisor to the side window.

To support the normal efforts on the sunvisor during the vehicle life, mainly resulting from its handling, it is required specific structural attachments to a structural part of the vehicle roof.

Between the stowed position and the frontal use position the sunvisor can adopt any intermediate position. Some of them imply a high risk of injuring the head of the vehicle occupant and consequently it compromises his/her safety.

Thus, the different angular positions adopted by the sunvisor during its rotational movement exposes the vehicle occupant head to several critical points in which there is a risk of head impact.

Therefore, one of the main drawbacks of the conventional sunvisors described above is related to the safety of the vehicle occupants.

In order to overcome said drawback, it is known retractable sunvisors which are stowed and hidden in a space available between the roof structure and the headliner.

Thus, retractable sunvisors can adopt a stowed position when the sunvisor is inside said space, an intermediate position when the sunvisor is outside said space and it is ready to be rotated, and an frontal use position in which the sunvisor adopts the shading position in such a way it protects the vehicle occupant from the glare coming through the windshield.

In order to move the retractable sunvisor from the stowed position to the frontal use position, firstly the sunvisor goes out sliding inside the space available between the roof structure and the headliner until it reaches the intermediate position. Said space has to be enough to allow the sliding movement of the sunvisor from the stowed position to the intermediate position. According to this intermediate position the sunvisor is close to the windshield.

Secondly, once the sunvisor is outside of said space, it can be rotated from said intermediate position being the retractable sunvisor close to the windshield, in order to adjust its angular position according to the relative position between the occupant eyes and the glare coming through the windshield, that is the frontal use position.

In this way, the rotational movement to adjust said angular position of the sunvisor between the intermediate position in which it is close to the windshield, and the use position, it is prevented any injuring risk position of the occupant head. Therefore, this kind of retractable sunvisors does not compromise the occupant safety.

Normally retractable sunvisors comprise an assistance device for assisting the sliding movement since its poor accessibility for the occupant due to the fact they are stowed in the space between the headliner and the roof structure.

Some known examples of the above described retractable sunvisors are the Japanese patents JP5012098 and JP4858188.

Said particular examples describe assistance devices being located just below the front cross beam which forms part of the roof structure and which are attached to the lower side of said cross-beam.

Normally the roof structure of a vehicle is formed by several structural beams surrounding the perimeter of the vehicle roof which form the chassis, and a roof sheet covering said structural beams, all together forming the vehicle bodywork.

Particularly the structural beams comprise among others, a front cross-beam, and two side longitudinal beams. All of them are extended from the roof sheet to the vehicle interior occupying a space in the z direction of the vehicle.

Since the assistance device comprises bulky parts, when they are located just below the front cross-beam, as the above mentioned examples describe, said bulky parts added to the space needed for allowing the sliding movement of the sunvisor, requires placing the headliner in a lower position reducing in this way the available room of the interior vehicle.

Thus, this is the main drawback of the sunvisors described in JP5012098 and JP4858188.

In order to overcome said drawback, it is known the Japanese patent JPH02200518 which describes a retractable sunvisor which is completely housed inside the front cross-beam.

However, this configuration implies a radical modification of the front cross-beam and thus of the chassis architecture and its behavior, what implies the modification of the structure of the vehicle which normally is not allowed by the vehicle manufacturers.

Other known solution in order to overcome the drawback related to the available room of the vehicle interior, it is to house the assistance device, or at least the bulkiest part of this, which often is an electric driver, or an assistance coil-spring shaft and its housing, just behind the front cross-beam, allowing to place the headliner closer to the roof structure in such a way that the needed space for the sliding of the sunvisor screen is minimized, and consequently the available room of the vehicle interior is maximized.

The assistance device, and particularly its bulkiest part, has to support either, driving forces, during the operation of the assistance device, and inertial forces, which affect the structural behavior of the whole assembly.

Therefore, the main challenge in this case comprises how to attach the bulkiest part of the assistance device in order to keep the structural stability of the assembly.

In view of the disadvantages mentioned above, the object of the present invention is a vehicle roof assembly with retractable sunvisor which does not penalize the available room of the vehicle interior, and at the same time it is conveniently attached to the roof structure in order to keep the structural stability of the whole assembly, avoiding noises and rattles, and ensuring a proper working of the whole assembly.

### DESCRIPTION OF THE INVENTION

The present invention is established and characterised by the independent claims, while the dependent claims describe additional features thereof.

Throughout the description, terms such as "x direction", "y direction", "z direction" "ZX plane", "ZY plane", "front", "rear", "above", or "below" are used.

The x, y and z direction refer to the main directions commonly used to reference a vehicle, namely x direction refers to the longitudinal direction of the vehicle corresponding to the direction of travel of the vehicle, y direction refers to the transverse direction of the vehicle, and z direction refers to the height direction of the vehicle.

The ZX plane and the ZY plane correspond to the planes formed according the directions above described.

The positions front and rear correspond to the relative positions of the vehicle parts along the x direction.

The positions above and below correspond to the relative positions of the vehicle parts along the z direction.

The above defined terms refer to a case in which the vehicle roof assembly with retractable sunvisor of the present invention is in use, that is when the vehicle roof assembly with retractable sunvisor is assembled in a vehicle.

Due to the particular configuration of the sunvisor being hidden between the roof structure and the headliner, the appearance of the headliner is not impaired due to the presence of the sunvisor when they are not in use.

Due to the way in which the sunvisor is rotated between the intermediate position in which it is close to the windshield, and the frontal use position, there is no risk of injuring the head of the vehicle occupant and consequently his/her safety is not compromised.

Due to the non-movable part of the assistance device for the sliding movement, particularly the bulkiest part of the assistance device is just behind the front cross-beam, and above the lowest point of the front cross-beam in the z direction, it is possible to minimize the space required to allow the sliding movement of the sunvisor screen assembly taking into account the total thickness of the assembly in the z direction. In this way the room of the vehicle interior is not penalized.

Due to the particular configuration of the attachment means, and more particularly its definition by at least three attachment points to the front cross-beam, it is possible to transmit the forces generated, particularly at the area in which the non-movable part of the assistance device is attached, directly to the roof structure, in such a way that the structural behaviour is kept during the use of the assembly, particularly during the working of the assistance device in such a way that noises and rattles are avoided and the proper working of the assembly is ensured.

### DESCRIPTION OF THE FIGURES

The present specification is completed by a set of figures that illustrate a preferred embodiment and in no way limit the invention.
Figure 1 shows a perspective explosion view of the vehicle roof assembly with retractable sunvisor.
Figure 2 shows a section according to a ZX plane of a vehicle roof assembly with retractable sunvisor wherein the space available between the headliner and the vehicle roof structure is represented.
Figure 3 shows a section according to a ZX plane of the vehicle roof assembly with retractable sunvisor wherein the different positions of the sunvisor screen are represented.
Figure 4 shows a perspective exploded view of the retractable sunvisor according to a first example of the assistance device for the sliding movement comprising an electric driver.
Figure 5 shows a perspective exploded view of the retractable sunvisor according to a second example of the assistance device for the sliding movement comprising a coil-spring.
Figure 6 shows a perspective exploded view of the retractable sunvisor according to a third example of the assistance device for the sliding movement comprising a coil-spring.
Figure 7 shows a perspective view of a structural frame comprising a plate according to an embodiment of the invention.
Figure 8 shows a perspective view of a structural frame according to an embodiment of the invention comprising a U-shaped frame formed by three beams.
Figure 9 shows a perspective view of a structural frame according to an embodiment of the invention comprising a closed frame formed by four beams.
Figure 10 shows a section according to a ZX plane of the vehicle roof assembly with retractable sunvisor having attachment means according to a first embodiment.
Figure 11 shows a perspective view of the vehicle roof assembly with retractable sunvisor according to the first embodiment of the attachment means represented in the figure 10.
Figure 12 shows a section according to a ZX plane of the vehicle roof assembly with retractable sunvisor having attachment means according to a second embodiment.
Figure 13 shows a perspective view of the vehicle roof assembly with retractable sunvisor according to the second embodiment of the attachment means represented in the figure 12.
Figure 14 shows a perspective view of the vehicle roof assembly with retractable sunvisor having attachment means according to a third embodiment.
Figure 15 shows a section according to a ZX plane of the vehicle roof assembly with retractable sunvisor wherein the follower-cam mechanism configured to assist the rotational movement of the sunvisor screen is represented.
Figure 16 shows a perspective view of a modular configuration of the invention in which the headliner and the retractable sunvisor are provided as a sole element.
Figure 17 shows a perspective view of the vehicle roof assembly with retractable sunvisor for vehicles wherein the sunvisor screen is positioned according to the lateral use position D.

### DETAILED DESCRIPTION OF THE INVENTION

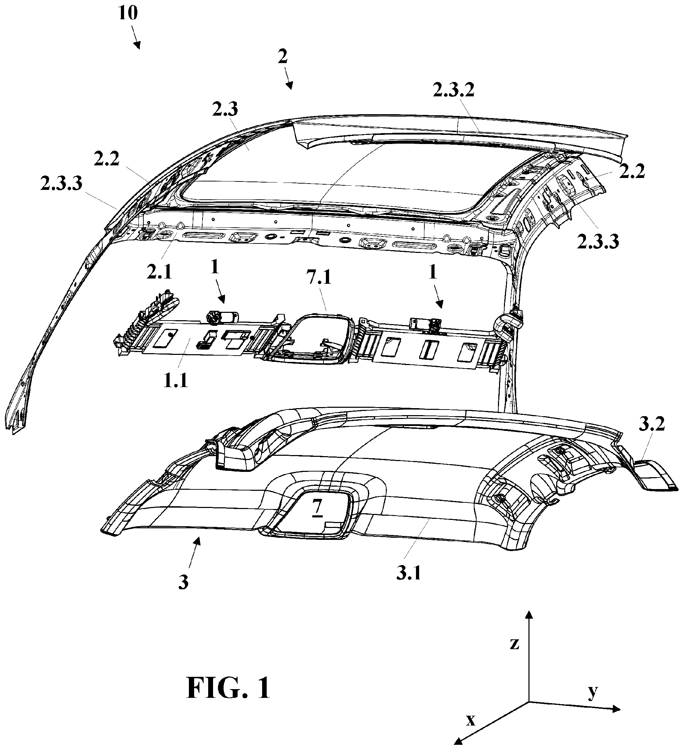

Figure 1 shows the vehicle roof assembly with retractable sunvisor (10) for vehicles according to the invention. Particularly it comprises three main components, namely, a vehicle roof structure (2), a headliner (3), and a retractable sunvisor (1) arranged in a space (4) formed between the headliner (3) and the vehicle roof structure (2) when it is in a stowed position.

Throughout the text only one retractable sunvisor (1) configuration is described, however the invention considers both, an option in which the vehicle roof assembly (10) comprises only one retractable sunvisor (1) according to the technical features described, or an option in which the vehicle roof assembly (10) comprises two retractable sunvisors (1) according to the technical features described for one of the retractable sunvisors (1), one retractable sunvisor (1) in correspondence with the driver position and other retractable sunvisor (1) in correspondence with the co-driver position.

Particularly, the vehicle roof structure (2) comprises a front cross-beam (2.1), a longitudinal side beam (2.2), a roof sheet (2.3), and a windshield (2.4).

In addition to the above described parts, the vehicle roof structure (2) also can comprise other common parts such as a middle cross-beam placed at the central portion of the roof sheet (2.3) and a rear cross-beam placed at a rear side of the roof sheet (2.3).

The front cross-beam (2.1) comprises an elongated profile which is lengthwise extended substantially in the y direction at the front part of the vehicle roof structure (2), defining two ends along the y direction. The thickness of the front cross-beam (2.1) is extended in the z direction.

The front cross-beam (2.1) can comprise an only profile or a combination of several parts configuring a structural element.

Additionally, it can comprise a profile having at each end an additional sheet needed in some cases depending of the vehicle architecture to connect the front cross-beam with the side longitudinal beams (2.2).

In any case, the front cross-beam (2.1) is able to withstand the forces transmitted by the elements forming the retractable sunvisor (1), particularly the assistance device (1.2.5) described in detail below.

The longitudinal side beam (2.2) comprises an elongated profile which is lengthwise extended substantially in the x direction from one of the ends of the front cross-beam (2.2). The thickness of the longitudinal side beam (2.2) is extended in the z direction.

The roof structure (2) comprises two longitudinal side beams (2.2). Each of said longitudinal beams (2.2) is extended substantially in the x direction from each of the ends of the front cross-beam (2.2). However, to explain the invention it is only necessary one of them, the corresponding to the side of the roof structure wherein the retractable sunvisor (1) is located, particularly one of the longitudinal side beam (2.2) affects to the retractable sunvisor (1) corresponding to the driver, and the other longitudinal side beam (2.2) affects to the retractable sunvisor (1) corresponding to the co-driver.

In all the cases the longitudinal side beam (2.2) comprises a profile formed by one or several parts joined together being able to withstand the forces transmitted by the elements forming the retractable sunvisor (1), particularly the assistance device (1.2.5) described in detail below according to one of the embodiments of the invention.

The roof sheet (2.3) is the element which covers the front cross-beam (2.1) and the longitudinal side beam (2.2). Additionally, it covers all the necessary structural components to configure the vehicle roof structure (2).

The roof sheet (2.3) comprises a front side (2.3.1), wherein the front cross-beam is connected and at which the windshield (2.4) extends downwards, a rear side (2.3.2) opposite to the front side (2.3.1) and two lateral sides (2.3.3) wherein the side longitudinal beams (2.2) are connected.

The roof sheet (2.3) can be made from metal, plastic, glass, composite material or from any combination thereof.

The windshield (2.4) comprises a transparent component through which the glare coming from the sun or from the vehicles in front reaches the vehicle occupant eyes.

The second main part which forms the vehicle roof assembly (10) is the headliner (3). It covers the vehicle roof structure (2) and it provides the decorative finishing of the vehicle roof assembly (10).

It comprises a first side (3.1) facing the vehicle interior (5), and a second side (3.2) facing the vehicle roof structure (2).

It can comprise several layers and materials forming its structure, including a decorative layer or finishing facing the vehicle interior (5).

It also can comprise an opening (3.3.1) in correspondence with its front side (3.3) configured to allow the exit of the sunvisor screen (described below) from a space (4) formed between the headliner (3) and the roof structure (2) to the outside of said space (4).

Said opening (3.3.1) can be replaced by providing a gap between the headliner (3) and the windshield (2.4) enough to allow the exit of the sunvisor screen assembly (1.1).

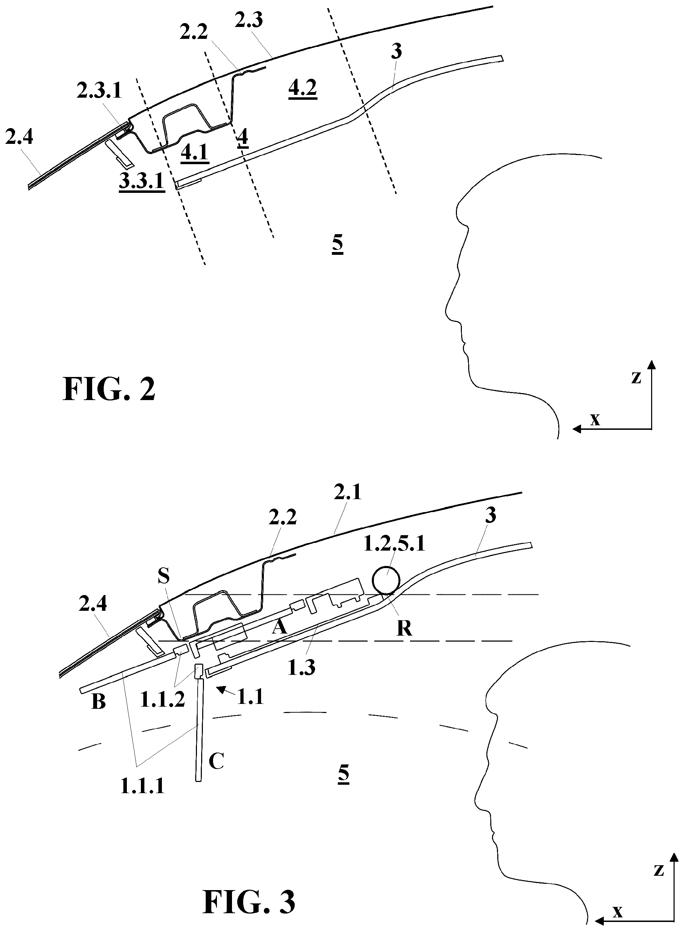

The space (4) formed between the headliner (3) and the roof assembly (2) as figure 2 shows, houses the retractable sunvisor (1).

Said space (4) is divided into a front room (4.1) that is closest to the windshield (2.4) and being just between the front cross-beam (2.1) and the headliner (3), and a back room (4.2) which is furthest from the windshield (2.4), and wherein said space (4) configures an empty space being between the vehicle roof structure (2) and the headliner (3).

The third main part which forms the vehicle roof assembly (10) is the retractable sunvisor (1). It is the element of the assembly (10) responsible to protect the vehicle occupant from the glare coming through the windshield (2.4).

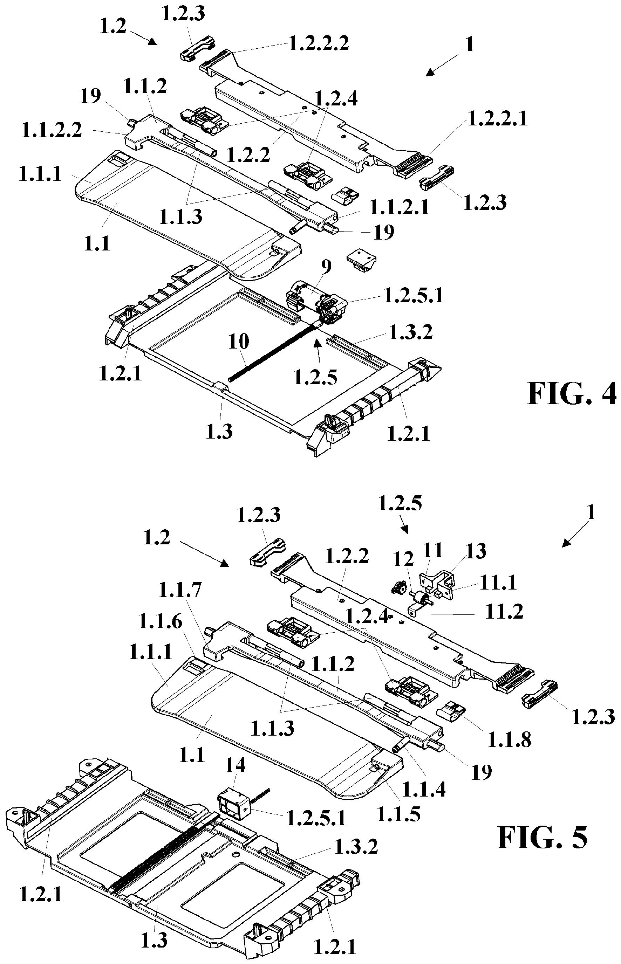

As figures 4-6 show, the retractable sunvisor (1) comprises as main components a sunvisor screen assembly (1.1), a sliding mechanism (1.2), and a structural frame (1.3).

The sunvisor screen assembly (1.1) is configured to move according to a sliding movement between a stowed position A in which the sunvisor screen assembly (1.1) is inside a space (4) formed between the headliner (3) and the roof sheet (2.3), and an intermediate position B in which the sunvisor screen assembly (1.1) is outside of said space (4) and it is close to the windshield (2.4) in such a way it is ready to be rotated in order to adopt a frontal use position C; and once the sunvisor screen assembly (1.1) is outside said space (4), the sunvisor screen assembly (1.1) is configured to move according to a rotational movement between the intermediate position B, and the frontal use position C in which the vehicle occupant is protected from the glare coming through the windshield (2.4). Between the intermediate position B and the frontal use position C, the sunvisor screen assembly (1.1) can also adopt several positions.

The sunvisor screen assembly (1.1) can comprise a sole component, or according to the configuration represented in the figures 4-6, it can comprise two main components, a sunvisor screen (1.1.1), being able to shade the glare, and a sunvisor screen support (1.1.2) which allows rotating the sunvisor screen (1.1.1) around a lateral protection shaft (1.1.4) in order to the sunvisor screen (1.1.1) is able to shade the glare coming through the side windows (20). Said additional function is described in detail below.

In either case, the sunvisor screen assembly (1.1) can comprise any kind of screen, such as a conventional opaque screen formed by a plastic structure having a decorative finishing, or it can comprise a dimmable screen having electrically adjustably transparency. Said dimmable screen can be a screen equipped for example with suspended particle devices (SPDs), or liquid crystals (LC), or polymer-dispersed liquid-crystal devices (PDLCs), in which the transparency can be adjusted by the application of a voltage.

In addition, the sunvisor screen assembly (1.1) can comprise a display screen for presenting any kind of information, such as text, images, or both. The sunvisor screen assembly (1.1) can also comprise a projectable surface wherein any kind information can be projected by a projector. In such particular cases the retractable screen (1) in which the sunvisor screen assembly (1.1) comprises a display screen or a projectable surface, it could be assembled to other cross-beams of the vehicle roof structure, such as a middle cross-beam.

The sliding mechanism (1.2) is the part configured to provide the sliding movement and the rotational movement of the sunvisor screen assembly (1.1).

Preferably, the sliding movement is carried out in a direction substantially parallel to the x direction, and the rotational movement is carried out around an axis fp which preferably is substantially parallel to the y direction. As figures 4-6 show, the sliding mechanism (1.2) comprises two side guides (1.2.1), a sliding beam (1.2.2), two sliders (1.2.3), rotational means (1.2.4, 1.1.3), and an assistance device (1.2.5).

The two side guides (1.2.1) are configured to allow the sliding movement of the sunvisor screen assembly (1.1). The side guides (1.2.1) are preferably extended in a direction substantially parallel to the x direction.

The side guides (1.2.1) can comprise a plastic or metallic profile configured to allow the sliding movement.

The two side guides (1.2.1) can be connected to the side portions (1.3.1) of the structural frame (1.3), or they can directly form the side portions (1.3.1) of the structural frame (1.3).

The sliding beam (1.2.2) is configured to slide between the two side guides (1.2.1).

The sliding beam (1.2.2) is connected to the sunvisor screen assembly (1.1) in order to said sunvisor screen assembly (1.1) can also be moved between the two side guides (1.2.1).

The sliding beam (1.2.2) has two side ends (1.2.2.1, 1.2.2.2). Each of these ends (1.2.2.1, 1.2.2.2) is connected to a slider (1.2.3) in order to allow the sliding movement of the sliding beam (1.2.2). In this way each of the sliders (1.2.3) is slidable movable in the corresponding side guide (1.2.1) to provide the sliding movement.

In order to allow the rotational movement of the sunvisor screen assembly (1.1) when it is at the intermediate position B, the sliding mechanism (1.2) comprises rotational means (1.2.4, 1.1.3).

The rotational means allow the rotational movement of the sunvisor screen assembly (1.1) with regard to the sliding beam (1.2.4) in order to adopt a frontal use position C.

The rotational means can comprise for example two rotation links (1.2.4) connected to the sliding beam (1.2.2) wherein two frontal protection shafts (1.1.3) provided in the sunvisor screen assembly (1.1) are rotatable connected. According to a case not represented, the rotation links (1.2.4) could be provided in the sunvisor screen assembly (1.1) and the frontal protection shafts (1.1.3) could be provided in the sliding beam (1.2.2).

In the particular case represented in the figures 4-6, the two frontal protection shafts (1.1.3) are provided in the sunvisor screen support (1.1.2). However, according to an embodiment not represented, the two frontal protection shafts (1.1.3) can be provided directly in the sunvisor screen (1.1.1).

The rotational links (1.2.4) house the spring (1.1.8) in charge of providing the sunvisor screen's (1.1.1) predefined working positions.

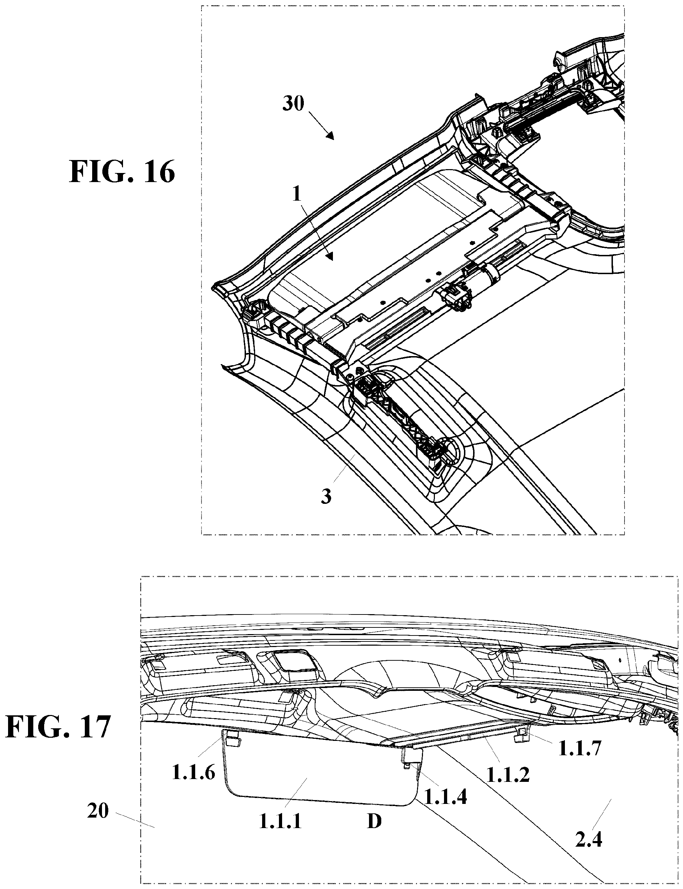

According to an optional configuration of the invention, when the sunvisor screen (1.1.1) is at the frontal use position C, it can be rotated laterally in order to adopt a lateral use position D in which the sunvisor screen (1.1.1) shades the glare coming through the side windows (20), as figure 17 shows.

The lateral rotational movement is carried out through a lateral protection shaft (1.1.4) having an axis lp substantially perpendicular to the fp axis. The lateral protection shaft (1.1.4) and the frontal protection shafts (1.1.3) form an integral part of a single unit, according to the particular configuration represented in the figures 4-6, said shafts (1.1.3, 1.1.4) form an integral part of the sunvisor screen support (1.1.2).

According to said particular configurations represented in figures 4-6, the lateral protection shaft (1.1.4) is insertable inside a housing (1.1.5) provided in the sunvisor screen (1.1.1) in order to allow the lateral rotational movement of said sunvisor screen (1.1.1) in relation to the sunvisor screen support (1.1.2). According to a configuration not represented, the housing could be provided in the sunvisor screen support (1.1.2) and the lateral protection shaft (1.1.4) could be provided in the sunvisor screen (1.1.1).

In order to keep a fixed position of the sunvisor screen (1.1.1) relative to the sunvisor screen support (1.1.2), the sunvisor screen (1.1.1) can comprise a fixing element (1.1.6), which collaborates with a counter fixing element (1.1.7) provided in the sunvisor screen support (1.1.2) and being in correspondence with the fixing element (1.1.6) as figure 17 shows.

Any of these fixing elements, the fixing element (1.1.6) and the counter fixing element (1.1.6), can comprise magnets, clips, or other known fixing means commonly used to fix the position of the sunvisor screen according to the frontal use position C.

This particular mechanism designed to adopt the lateral use position D brings additional advantages in comparison with the mechanisms provided in the conventional non-retractable sunvisors which are pivotally attached to the vehicle roof.

It is because when the vehicle occupant moves a non-retractable sunvisor screen in order to adopt the lateral use position D, it is common to pull the sunvisor screen downwards. Said downwards movement exerts torque forces on the L-shaped shaft of the non-retractable sunvisor screen, both at the vehicle roof attachment point and at the sunvisor screen attachment point, which can cause the malfunction of the sunvisor.

However, the particular mechanism designed to provide the lateral movement of the sunvisor screen (1.1.1) of the present invention avoids damaging the mechanism during the downwards movement of the sunvisor screen (1.1.1) because the sunvisor screen (1.1.1) is capable to rotate around the axis fp during this lateral movement before reaching the lateral use position D of the sunvisor screen (1.1.1) avoiding any damage caused by torque forces.

The assistance device (1.2.5) is linked to the sliding beam (1.2.2) and it is configured to assist the sliding movement of the sunvisor screen assembly (1.1) since the sliding beam (1.2.2) is connected to the sunvisor screen assembly (1.1).

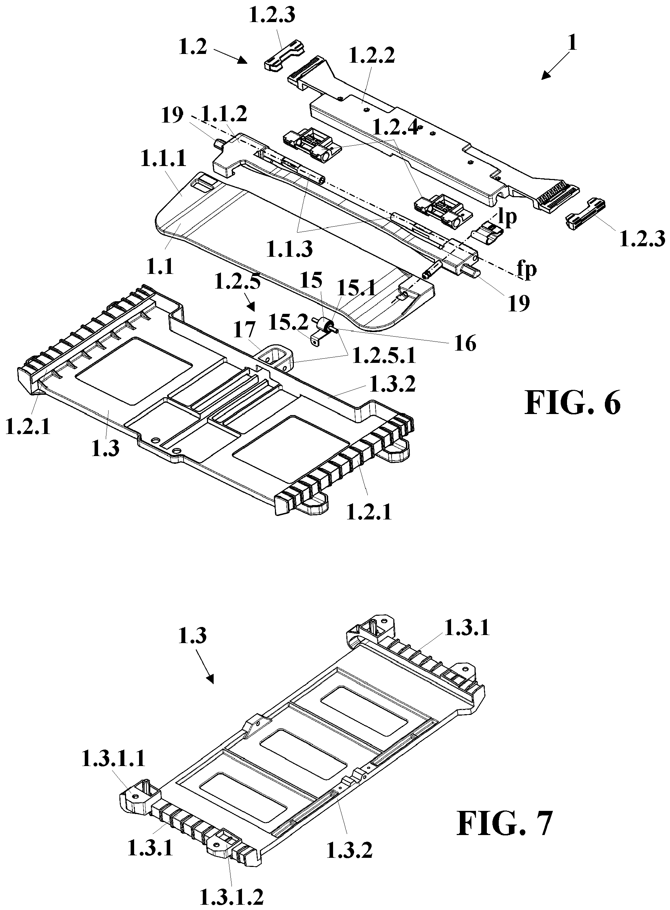

In this way, the assistance device (1.2.5) allows automatizing at least one of the sliding movements of the sunvisor screen assembly (1.1) between the stowed position A and the intermediate position B wherein the sunvisor screen assembly (1.1) is close to the windshield (2.4), either during the opening movement, that is when the sunvisor screen assembly (1.1) moves from the stowed position A to the intermediate position B, as figure 5 shows, or during the closing movement, that is when the sunvisor screen assembly (1.1) moves from the intermediate position B to the stowed position A, as the figure 6 shows.

In these cases, the corresponding non-automatized movements are carried out manually by the vehicle occupant.

Additionally, the invention considers the case in which both movements, the opening movement and the closing movement are automatized by the assistance device (1.2.5), as the figure 4 shows.

The assistance device (1.2.5) comprises at least a non-movable part (1.2.5.1). It means that said non-movable part (1.2.5.1) does not move when the sliding movement of the sunvisor screen assembly (1.1) is carried out.

The non-movable part (1.2.5.1) is the bulkiest part of the assistance device (1.2.5).

Particularly the non-movable part (1.2.5.1) is housed in the back room (4.2) of the space (4) formed between the headliner (3) and the roof structure (2) which is just behind the front cross-beam (2.1), in such a way that, in use, the lowest point S of the front cross-beam (2.1) according to a section in any plane XZ crossing the non-movable part (1.2.5.1) of the assistance device (1.2.5) is below, along a Z direction, the lowest point R of the non-movable part (1.2.5.1) of the assistance device (1.2.5) according to the same plane XZ crossing the non-movable part (1.2.5.1) of the assistance device (1.2.5).

The term "in use" used in the previous paragraph means that the vehicle roof assembly with retractable sun visor is assembled on a vehicle, and said vehicle rests on a horizontal surface.

As figures 4-6 show, the invention considers several options to configure the assistance device (1.2.5).

Particularly, the figure 4 shows a first variant of the assistance device (1.2.5) comprising an electric driver (9) as non-movable part (1.2.5.1) of the assistance device (1.2.5). In this case, the electric driver (9) is the bulkiest part of the assistance device (1.2.5). It is connected to the back supporting area (1.3.2) of the structural frame (1.3) described below.

The assistance device (1.2.5) represented in the figure 4 also comprises a worm gear (10) rotatable powered by the electric driver (9). The worm gear (10) is connected to the sliding beam (1.2.2) in order to provide the sliding movement of the sunvisor screen assembly (1.1) since the sliding beam (1.2.2) is connected to the sunvisor screen assembly (1.1).

According this particular case, both the opening movement and the closing movement of the sunvisor screen assembly (1.1) are automatized.

Figure 5 shows a second variant of the assistance device (1.2.5) comprising a movable coil-spring (11) having a first (11.1) end and a second end (11.2), a winding shaft (12), wherein the coil spring (11) is wound, a storage space (13) for the movable coil-spring (11), and a non-movable part (1.2.5.1) comprising a solenoid (14) in order to release the movable coil-spring (11).

The first end (11.1) of the movable coil-spring (11) is attached to the winding shaft (12) and the second end (11.2) of the movable coil-spring (11) is attached to a front area of the structural frame (1.3).

According to this particular case, the winding shaft (12) and the storage space (13) for the movable coil-spring are attached to the sliding beam (1.2.2), and the solenoid (14) configures the non-movable part (1.2.5.1) of the assistance device (1.2.5) being the bulkiest part of it.

Therefore, said solenoid (14) is connected to the back supporting area (1.3.2) of the structural frame (1.3) described below.

The assistance device (1.2.5) according this particular variant of the invention, allows automatizing the opening movement of the sunvisor screen assembly (1.1). Therefore, the closing movement is carried out manually by the vehicle occupant.

Figure 6 shows an assistance device (1.2.5) according to a third variant of the invention. It comprising a coil-spring (15) having a first end (15.1) and a second end (15.2), and a non-movable part (1.2.5.1) comprising a winding shaft (16), wherein the coil-spring (15) is wound, and a storage space (17) for the coil-spring (15). The first end (15.1) of the coil-spring (15) is attached to the winding shaft (16) and the second end (15.2) of the coil-spring (15) is attached to the sliding beam (1.2.1).

In this particular case, the assembly formed by the winding shaft (16) and the storage space (17) for the coil-spring (15), configures the non-movable part (1.2.5.1) of the assistance device (1.2.5) being the bulkiest part of it.

Therefore, said assembly is connected to the back supporting area (1.3.2) of the structural frame (1.3) described below.

This particular assistance device (1.2.5) allows automatizing the closing movement of the sunvisor screen assembly (1.1). Therefore, the opening movement is carried out manually by the vehicle occupant.

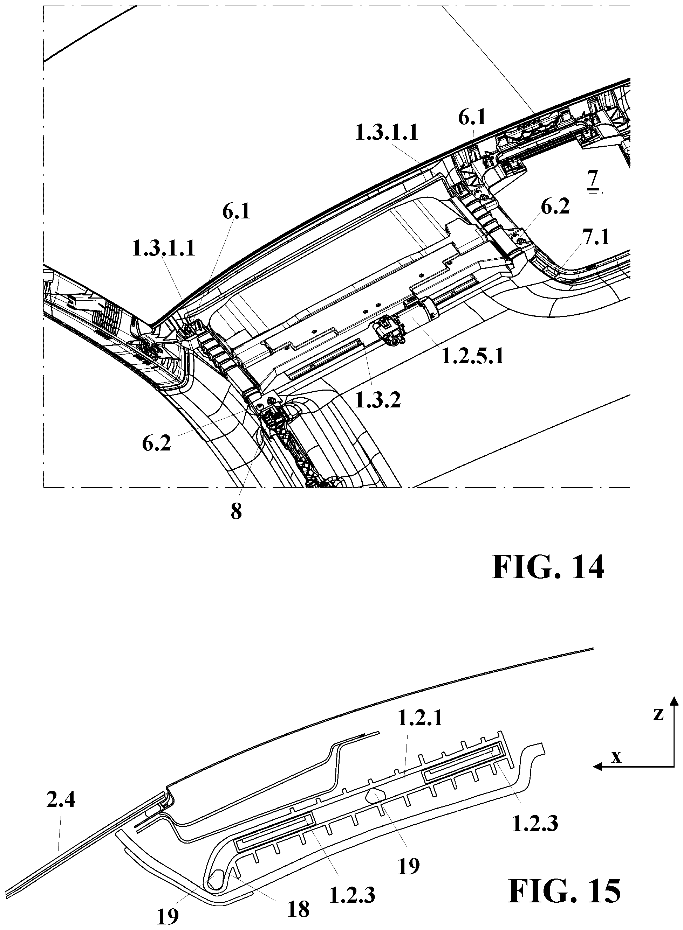

Regarding the rotational movement of the sunvisor screen assembly (1.1), that is, the movement of the sunvisor screen assembly (1.1) between the intermediate position B and the frontal use position C, it can be carried out either manually by the vehicle occupant, or automatically by a follower-cam mechanism represented in the figure 15, wherein the followers (18) are provided as an extension projected downwards from the slide guides (1.2.1) at the front edges of said slide guides (1.2.1), and the cams (19) are provided at the sunvisor screen assembly (1.1), particularly as an outward projection from two ends of the sunvisor screen assembly (1.1) in the y direction, in such a way that said cams (19) are able to collaborate with the side guides (1.2.1) and the corresponding followers (18).

According to the particular configuration represented in the figures 4-6, the cams (19) are provided as an outward projection from two ends (1.1.2.1, 1.1.2.2) of the sunvisor screen support (1.1.2) in the y direction.

Particularly, figure 15 shows a section of the sunvisor screen assembly (1.1) according to a plane XZ crossing one of the cams (19) of the follower-cam mechanism, wherein two positions of the sunvisor screen assembly (1.1) are represented, the stowed position A, and the frontal use position C. Figure 15 particularly shows how the cams (19) collaborate with the side guides (1.2.1) and the followers (18) in each of these positions.

The last part which forms the retractable sunvisor (1) is the structural frame (1.3).

It is the part of the retractable sunvisor (1) responsible to connect the sliding mechanism (1.2) and the sunvisor screen assembly (1.1) to the vehicle roof structure (2) and to transmit the forces generated mainly at the area in which the non-movable part (1.2.5.1) of the assistance device (1.2.5) is attached, directly to the roof structure (2).

The structural frame (1.3) comprises:
- Two side portions (1.3.1) to configure the side guides (1.2.1). It means that the side guides (1.2.1) can be connected to the side portions (1.3.1) or said two side portions can be directly shaped to perform the function of the side guides (1.2.1) as figures 7-9 show.
   Each of said side portions (1.3.1) has a front end (1.3.1.1) close to the windshield (2.4), and a rear end (1.3.1.2) away from the windshield (2.4).
- A back supporting area (1.3.2) for the non-movable part (1.2.5.1) of the assistance device (1.2.5). Said supporting part is extended substantially in the y direction at the rear side of the structural frame (1.3) and it connects the two side portions (1.3.1).

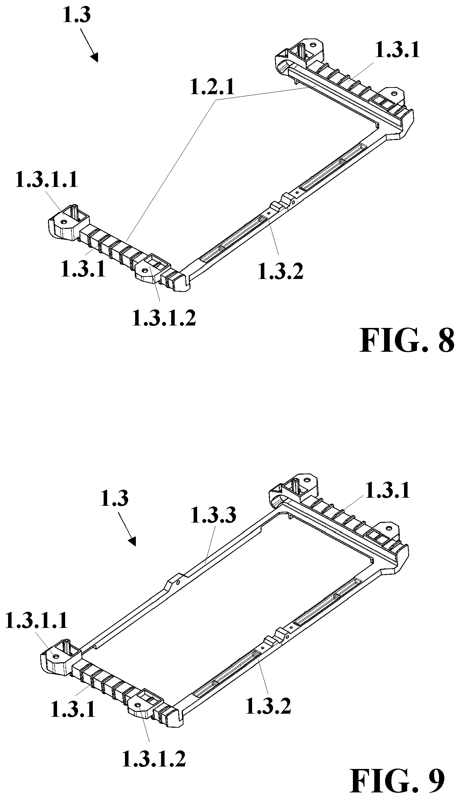

Taking into account the above mentioned parts of the structural frame (1.3), it can comprise for example a plate as figure 7 shows, an opened u-shaped structure as figure 8 shows, which is formed by three beams connected, two side beams configuring the side portions (1.3.1) of the structural frame (1.3), which are connected by a back beam configuring the back supporting area (1.3.2) of the structural frame (1.3), or as figure 9 shows, the structural frame (1.3) can comprise a closed structure comprising in addition to two side beams connected by the back beam, a front beam (1.3.3) connecting the side beams configuring the side portions (1.3.1) of the structural frame (1.3) at the front part of the structural frame (1.3).

The structural frame (1.3) comprises attachment means (6) of the retractable sunvisor (1) to the vehicle roof structure (2) in order to transmit the forces generated mainly during the operation of the assistance device (1.2.5) to the vehicle roof structure (2).

Particularly the attachment means (6) comprise at least three attachment points to the front cross-beam (2.1), two of them being in the front edges (1.3.1.1) of the side portions (1.3.1), the so-called front attachments (6.1), and one of them being in the back supporting area (1.3.2), the so-called back attachment (6.2).

This particular configuration allows enough supporting of the retractable sunvisor (1) in use, particularly as consequence of the forces generated by the assistance device (1.2.5) due to the structural configuration of the front cross-beam (2.1).

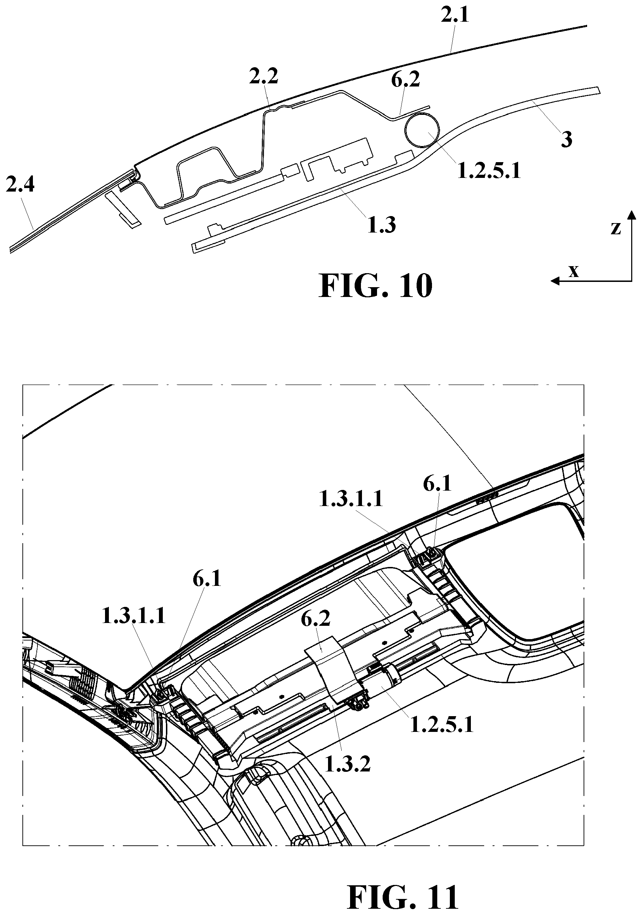

Regarding the attachment means (6) the invention consider several options, as figures 10-14 show.

According to the option represented in the figures 10 and 11, the structural frame (1.3) comprises two front attachments (6.1) to the front cross-beam (2.1), and a back attachment (6.2) to the front cross-beam (2.1).

Particularly the front attachments (6.1) are configured by fixing means which connect directly the front edges (1.3.1.1) of the side portions (1.3.1) to the front cross-beam (2.1). Said fixing means can comprise metal staples, screws, plastic clips or magnets.

According this particular case, the back attachment (6.2) is placed at the middle portion of the back supporting area (1.3.2).

It comprises a s-shaped plate which allows connect the back supporting area (1.3.2) being away from the front cross-beam (2.1) to said front cross-beam (2.1).

In this way it is possible two stablish a structural connection between the back supporting area (1.3.2) and a structural part of the vehicle roof structure (2), namely the front cross-beam (2.1).

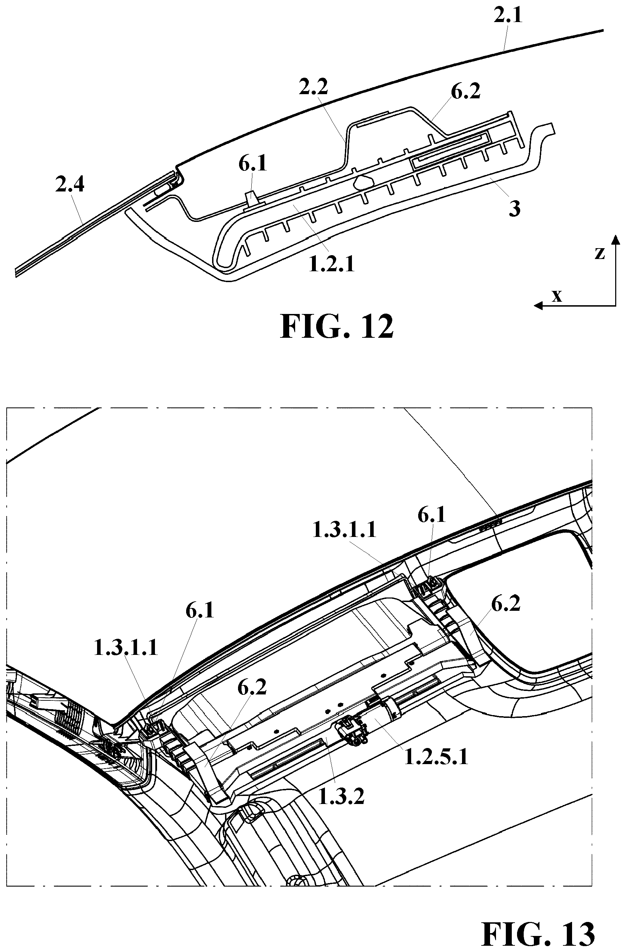

According to the option represented in the figures 12 and 13, the structural frame (1.3) comprises two front attachments (6.1) to the front cross-beam (2.1) and a two back attachments (6.2) to the front cross-beam (2.1).

As the option represented in the figures 10-11 above described, the front attachments (6.1) according to this option are configured by fixing means which connect directly the front edges (1.3.1.1) of the side portions (1.3.1) to the front cross-beam (2.1). They also can comprise metal staples, screws, plastic clips or magnets.

The back attachments (6.2) are placed at the ends of the back supporting area (1.3.2).

They comprise s-shaped plates which allow connect the back supporting area (1.3.2) being away from the front cross-beam (2.1) to said front cross-beam (2.1).

In this way it is possible two stablish a structural connection between the back supporting area (1.3.2) and a structural part of the vehicle roof structure (2), namely the front cross-beam (2.1).

According to the option represented in the figure 14, the structural frame (1.3) also comprises two front attachments (6.1) to the front cross-beam (2.1) and a two back attachments (6.2) to the front cross-beam (2.1), as the option represented in the figures 12 and 13.

According to this particular option the front attachments (6.1) are configured by fixing means which connect directly the front edges (1.3.1.1) of the side portions (1.3.1) to the front cross-beam (2.1). They also can comprise metal staples, screws, plastic clips or magnets.

As the option represented in the figures 12 and 13, the back attachments (6.2) according to this option are also placed at the ends of the back supporting area (1.3.2) and they comprise a first back attachment (6.2.1) close to the middle roof console area (7), and a second back attachment (6.2.2) close to the side longitudinal beam (2.2).

Particularly, the first back attachment (6.2.1) is connected to the front-cross beam (2.1) either directly, or by the middle roof console frame (7.1), that is, the first back attachment (6.2.1) before reaching the front-cross beam (2.1) it passes thorough an opening provided in the middle roof console frame (7.1).

The second back attachment (6.2.2) is connected to the side longitudinal beam (2.2) either directly or by the side handle (8), that is, the second back attachment (6.2.2) before reaching the side longitudinal beam (2.2), it passes thorough an opening provided in the side handle (8).

The election of the attachment option mainly depends on the vehicle roof architecture, that is, its curvature, the positions and size of the structural elements such as the front cross-beam (2.1) and the side longitudinal beam (2.2), etc.

According to a particular embodiment of the invention represented in figure 16, the headliner (3) and the retractable sunvisor (1) are joined together in such a way they form a modular headliner (30) configured to be mounted to the vehicle roof structure (2) as a sole component.

According to this embodiment the structural frame (1.3) is preferably attached to the second side (3.2) of the headliner (3) by adhesive.

According to another particular embodiment of the invention not represented, the roof structure (2) comprises a sunroof. In this particular case, the headliner (3) can be divided into two parts, a frontal decorative part, called header, and the headliner as such provided around the sunroof. In this case the frontal decorative part and the retractable sunvisor (1) are joined together in such a way they form a modular frontal decorative part configured to be mounted to the vehicle roof structure (2) as a sole component.

## Claims

1. Vehicle roof assembly (10) with retractable sunvisor (1) for vehicles comprising:
- vehicle roof structure (2) comprising:
• a front cross-beam (2.1),
• a longitudinal side beam (2.2),
• a roof sheet (2.3) covering the front cross-beam (2.1) and the longitudinal side beam (2.2) and having a front side (2.3.1),
• a windshield (2.4) extending from a front side (2.3.1) of the roof sheet (2.3),
- a headliner (3) covering the vehicle roof structure (2),
- a retractable sunvisor (1) comprising:
• a sunvisor screen assembly (1.1) configured to move according to a sliding movement between a stowed position A, in which the sunvisor screen assembly (1.1) is inside a space (4) formed between the headliner (3) and the roof sheet (2.3), and an intermediate position B, in which the sunvisor screen assembly (1.1) is outside the space (4) formed between the headliner (3) and the roof sheet (2) in such a way it is ready to be rotated in order to adopt a frontal use position C; and once the sunvisor screen assembly (1.1) is outside said space (4), the sunvisor screen assembly (1.1) is configured to move according to a rotational movement between the intermediate position B, and the frontal use position C in which the vehicle occupant is protected from the glare coming through the windshield (2.4),
• a sliding mechanism (1.2) configured to provide the sliding movement and the rotational movement of the sunvisor screen assembly (1.1), wherein the sliding mechanism (1.2) comprises:
- two side guides (1.2.1) being configured to allow the sliding movement of the sunvisor screen assembly (1.1),
- a sliding beam (1.2.2) connected to the sunvisor screen assembly (1.1) and having two side ends (1.2.2.1, 1.2.2.2), wherein the sliding beam (1.2.2) is configured to slide between the two side guides (1.2.1),
- two sliders (1.2.3) each connected to each of the side ends (1.2.2.1, 1.2.2.2) of the sliding beam (1.2.2) in such a way that each of the sliders (1.2.3) is slidable movable in the corresponding side guide (1.2.1),
- rotational means (1.2.4, 1.1.3) between the sunvisor screen assembly (1.1) and the sliding beam (1.2.4) configured to allow the rotational movement of the sunvisor screen assembly (1.1) with regard to the sliding beam (1.2.4) around an axis fp,
- an assistance device (1.2.5) linked to the sliding beam (1.2.2) and configured to assist the sliding movement of the sunvisor screen assembly (1.1), wherein the assistance device (1.2.5) comprises at least a non-movable part (1.2.5.1),
• A structural frame (1.3) comprising:
- two side portions (1.3.1) to configure the side guides (1.2.1), wherein each of said side portions (1.3.1) has a front edge (1.3.1.1) close to the windshield (2.4), and a rear edge (1.3.1.2) away from the windshield (2.4),
- a back supporting area (1.3.2) for the non-movable part (1.2.5.1) of the assistance device (1.2.5),
wherein the space (4) formed between the headliner (3) and the vehicle roof structure (2) is divided into a front room (4.1) close to the windshield (2.4) being just between the front cross-beam (2.1) and the headliner (3), and a back room (4.2) away from the windshield (2.4), wherein said space (4) configures an empty space being between the vehicle roof structure (2) and the headliner (3),
**characterized in that**:
the non-movable part (1.2.5.1) of the assistance device (1.2.5) is housed in the back room (4.2) of the space (4), the non-movable part (1.2.5.1) is behind the front cross-beam (2.1), in such a way that, in use, the lowest point S of the front cross-beam (2.1) according to a section in any plane XZ crossing the non-movable part (1.2.5.1) of the assistance device (1.2.5) is below, along a Z direction, the lowest point R of the non-movable part (1.2.5.1) of the assistance device (1.2.5) according to the same plane XZ crossing the non-movable part (1.2.5.1) of the assistance device (1.2.5),
the structural frame (1.3) comprises three attachment points (6) to the front cross-beam (2.1), two of them, the front attachments (6.1) being in the front edges (1.3.1.1) of the side portions (1.3.1), and one of them, the back attachment (6.2) being in the back supporting area (1.3.2).

2. Vehicle roof assembly (10) with retractable sunvisor (1) for vehicles according to claim 1 wherein the structural frame (1.3) comprises a plate.

3. Vehicle roof assembly (10) with retractable sunvisor (1) for vehicles according to claim 1 wherein the structural frame (1.3) comprises a back beam and two side beams.

4. Vehicle roof assembly (10) with retractable sunvisor (1) for vehicles according to claim 3 wherein the structural frame (1.3) comprises a front beam in such a way the structural frame (1.3) is a closed structure.

5. Vehicle roof assembly (10) with retractable sunvisor (1) for vehicles according to claim 1 wherein the front attachment points (6.1) are configured by fixing means which connect directly the front edges (1.3.1.1) of the side portions (1.3.1) to the front cross-beam (2.1).

6. Vehicle roof assembly (10) with retractable sunvisor (1) for vehicles according to claim 1 wherein the rear attachment point (6.2) is placed at a middle portion of the back supporting area (1.3.2).

7. Vehicle roof assembly (10) with retractable sunvisor (1) for vehicles according to claim 1 wherein the structural frame (1.3) comprises two rear attachment points (6.2) placed at the ends of the back supporting area (1.3.2).

8. Vehicle roof assembly (10) with retractable sunvisor (1) for vehicles according to claim 7 wherein the two rear attachment points (6.2) are attached to the front cross-beam (2.1).

9. Vehicle roof assembly (10) with retractable sunvisor (1) for vehicles according to claim 7 wherein one of the rear attachment points (6.2) is attached to the front the longitudinal side beam (2.2).

10. Vehicle roof assembly (10) with retractable sunvisor (1) for vehicles according to claim 1 wherein the assistance device (1.2.5) comprises a coil-spring (15) having a first end (15.1) and a second end (15.2), and the non-movable part (1.2.5.1) comprises a winding shaft (16) and a storage space (17) for the coil-spring (15), wherein the first end (15.1) is attached to the sliding beam (1.2.1) and the second edge (15.2) is attached to the winding shaft (16).

11. Vehicle roof assembly (10) with retractable sunvisor (1) for vehicles according to claim 1 wherein the assistance device (1.2.5) comprises a movable coil-spring (11) having a first end (11.1) and a second end (11.2), a winding shaft (12) wherein the movable coil-spring (11) is wound, a storage space (13) for the movable coil-spring (11) and a solenoid (14) forming the non-movable part (1.2.5.1) in order to release the movable coil-spring (11), wherein the first end (11.1) is attached to the winding shaft (12) and the second end (11.2) is attached to a front area of the structural frame (1.3).

12. Vehicle roof assembly (10) with retractable sunvisor (1) for vehicles according to claim 1 wherein the assistance device (1.2.5) comprises an electric driver as the non-movable part (1.2.5.1) of the assistance device (1.2.5), a worm gear (10) rotatable powered by an electric driver (9), and connected to the sliding beam (1.2.2).

13. Vehicle roof assembly (10) with retractable sunvisor (1) for vehicles according to claim 1 wherein the rotational movement of the sunvisor screen assembly (1.1) is carried out manually by the vehicle occupant.

14. Vehicle roof assembly (10) with retractable sunvisor (1) for vehicles according to claim 1 wherein the rotational movement of the sunvisor screen assembly (1.1) is carried out by a follower-cam mechanism wherein the followers (18) are provided as an extension projected downwards from the slide guides (1.2.1) at the front edges of said slide guides (1.2.1), and the cams (19) are provided at the sunvisor screen assembly (1.1) as an outward projection from two ends of the sunvisor screen assembly (1.1) in the y direction, in such a way said cams (19) are able to collaborate with the side guides (1.2.1) and the corresponding followers (18).

15. Vehicle roof assembly (10) with retractable sunvisor (1) for vehicles according to claim 1 wherein the sunvisor screen assembly (1.1) is movable by a lateral rotational movement from the frontal protection position C to a lateral use position D via a lateral protection shaft (1.1.4) having an axis lp substantially perpendicular to the fp axis.
